# FASCICULE DE BREVET EUROPEEN

(11) **EP 2 389 264 B1**
(45) Date de publication et mention de la délivrance du brevet: **12.12.2012**
(21) Numéro de dépôt: 10707315.7
(22) Date de dépôt: 19.01.2010
(51) Int. Cl.: B23B 31/12, B23B 31/165

(54) **MANDRIN PORTE-OUTIL POUR L'ÉQUIPEMENT D'UNE MACHINE TOURNANTE**
WERKZEUGSPANNFUTTER ZUM VORSEHEN AN EINER ROTIERENDEN MASCHINE
TOOL HOLDER MANDREL FOR EQUIPPING A ROTATING MACHINE

(30) Priorité: 26.01.2009 FR 0950441
(43) Date de publication de la demande: 30.11.2011
(73) Titulaire: Etablissements Amyot S.A., 25300 Pontarlier (FR)
(72) Inventeur: CACHOD, Yves, F-25270 Levier (FR)
(74) Mandataire: Maureau, Philippe
(86) Numéro de dépôt international: PCT/FR2010/050073
(87) Numéro de publication internationale: WO 2010/084278

(56) Documents cités:
- EP-A- 0 331 867
- EP-A1- 1 314 499
- DE-C- 16 497
- GB-A- 2 429 667
- US-B1- 6 260 857

## Description

L'invention concerne un mandrin porte-outil pour l'équipement d'une machine tournante.

La machine tournante peut notamment être une perceuse ou un tournevis électrique.

Un mandrin classique comporte un corps comprenant une partie arrière destinée à être fixée à un arbre moteur de la machine tournante et une partie avant dans laquelle sont ménagés des logements convergeant vers l'avant. Les logements servent chacun au montage coulissant d'un mors comportant un filetage extérieur. Un écrou, présentant un filetage intérieur coopérant avec le filetage extérieur des mors, est couplé à une chemise formant une partie de la surface extérieure du mandrin. La rotation de la chemise par un opérateur provoque la rotation de l'écrou et ainsi le rapprochement ou l'écartement des mors.

Un autre type de mandrin, connu notamment du brevet français FR 2 883 208 au nom de la Déposante, comprend une pièce centrale comportant une partie arrière destinée à être fixée à un arbre moteur de la machine tournante et une partie avant présentant un filetage périphérique. Un corps formé par une cage en tôle est monté pivotant sur la pièce centrale et présente des logements dans lesquels sont guidés des mors. Chaque mors présente un filetage interne coopérant avec le filetage périphérique de la partie centrale. Le mandrin comporte en outre une chemise d'actionnement, couplée en rotation au corps, la rotation de la chemise entraînant ainsi en rotation le corps et les mors, ces derniers se déplaçant alors en se rapprochant ou en s'écartant les uns par rapport aux autres.

Le document DE 16 497 divulgue un mandrin selon le préambule de la revendication 1.

Il existe un besoin de pouvoir encore simplifier la structure d'un mandrin et diminuer les dimensions de celui-ci.

A cet effet, l'invention concerne un mandrin porte-outil selon la revendication 1.

Un tel mandrin présente une structure simple et compacte, particulièrement adaptée à des utilisations pour lesquelles les couples de serrage sont peu élevés.

En outre, l'angle important des mors permet de pouvoir raccourcir la longueur du mandrin. L'augmentation de l'inclinaison a pour effet de nécessiter un couple de serrage plus important, fourni par l'utilisateur.

Avantageusement, les mors s'étendent selon un axe incliné par rapport à l'axe du mandrin, d'un angle compris entre 16° et 20°, préférentiellement de l'ordre de 17°. Un angle de l'ordre de 17° offre un bon compromis entre la longueur du mandrin et le couple de serrage à fournir.

Avantageusement, les moyens de verrouillage radial sont immobilisés en rotation sur l'insert, et la chemise possède un mouvement relatif angulaire par rapport aux moyens de verrouillage et à l'insert entre une première position dans laquelle les moyens de verrouillage sont en position déverrouillée et la chemise peut entraîner en rotation l'insert et une seconde position dans laquelle les moyens de verrouillage sont en position verrouillée, les déplacements de la chemise entre ses première et seconde positions actionnant les déplacements des moyens de verrouillage entre leurs positions déverrouillée et verrouillée.

De préférence, les moyens de verrouillage comprennent au moins une première lame ressort montée fixe angulairement sur l'insert et possédant une extrémité libre qui fait saillie au travers d'un évidement ménagé dans la bague de déplacement des mors et qui, en position verrouillée des moyens de verrouillage radial, coopère avec une denture périphérique ménagée sur le corps.

De façon avantageuse, les moyens de verrouillage comprennent au moins une deuxième lame ressort qui possède une extrémité libre munie d'un relief qui coopère respectivement dans les première et seconde positions de la chemise, avec une première et une deuxième dépressions ménagées dans la chemise.

De façon préférentielle, les première et deuxième lames ressort sont solidaires d'un anneau porté par l'insert et immobilisé en rotation sur cet insert au moyen d'au moins deux portions de fixation qui pénètrent dans des parties complémentaires ménagées dans l'insert.

De préférence, la chemise comprend au moins une partie évidée dans laquelle l'extrémité libre de la première lame ressort est logée, dans la première position de la chemise, pour dégager cette extrémité libre hors de la denture du corps.

La chemise comporte préférentiellement au moins deux encoches qui coopèrent avec au moins deux doigts ménagés sur l'insert, les encoches étant centrées sur l'axe du mandrin et étant d'une longueur supérieure à celle des doigts de l'insert, cette longueur étant considérée dans le sens de l'arc de cercle suivant lequel s'étendent ces encoches.

Avantageusement, la différence de longueur entre les doigts de l'insert et les encoches de la chemise est adaptée pour que dans la première position de la chemise, les doigts sont en butée contre l'une des faces des encoches et le relief de la deuxième lame ressort est dans la première dépression, et que dans la seconde position de la chemise, les doigts sont en butée contre l'autre des faces des encoches et le relief de la deuxième lame ressort est dans la deuxième dépression.

De préférence, les portions de fixation de l'anneau comprennent chacune une base qui s'étend sensiblement radialement vers l'extérieur à partir de l'anneau et deux replis qui s'étendent depuis la base transversalement par rapport au plan de l'anneau, les replis étant montées de manière élastique sur les doigts de l'insert qui pénètrent dans les encoches de la chemise.

Préférentiellement, le mandrin comporte un capuchon annulaire, fixé à l'avant du corps. Le capuchon annulaire et le corps peuvent être réalisés en une seule pièce ou en deux pièces séparées.

Préférentiellement, le filetage périphérique de la bague de déplacement des mors est un filetage à droite.

De préférence, chaque mors présente une partie avant, et une partie arrière comportant une première portion s'étendant à partir de la partie avant et une seconde portion s'étendant à partir de la première portion, la face de la seconde portion tournée vers l'extérieur étant située en retrait du prolongement de la face de la première portion tournée vers l'extérieur. De préférence, la seconde portion de la partie arrière de chaque mors présente une section inférieure à celle de la première portion correspondante. Avantageusement, la partie arrière de chaque mors présente, sur sa face tournée vers l'extérieur, un méplat s'étendant selon l'axe A du mandrin. Un tel méplat est de préférence réalisé par fraisage.

La partie arrière de chaque mors comporte de façon préférentielle une face tournée vers l'intérieur présentant un filetage destiné à coopérer avec le filetage périphérique de la bague de déplacement des mors.

De toute façon, l'invention sera bien comprise à l'aide de la description qui suit, en référence au dessin schématique annexé représentant, à titre d'exemples, deux formes de réalisation de ce mandrin.
Figure 1 est une vue en coupe longitudinale d'un mandrin selon un premier mode de réalisation ;
Figure 2 est une vue de face du mandrin de la figure 1 ;
Figure 3 est une vue éclatée en perspective du mandrin de la figure 1 ;
Figure 4 est une vue de face d'un mandrin selon un second mode de réalisation ;
Figure 5 est une vue en coupe longitudinale du mandrin de la figure 4 selon la ligne V-V de la figure 4 ;
Figure 6 est une vue de côté du mandrin de la figure 4 ;
Figure 7 est une vue éclatée en perspective du mandrin de la figure 4 ;
Figures 8 et 9 sont deux vues en coupe transversale du mandrin de la figure 4, selon la ligne VIII-VIII de la figure 6, respectivement en position de déverrouillage et en position de verrouillage de ce mandrin.

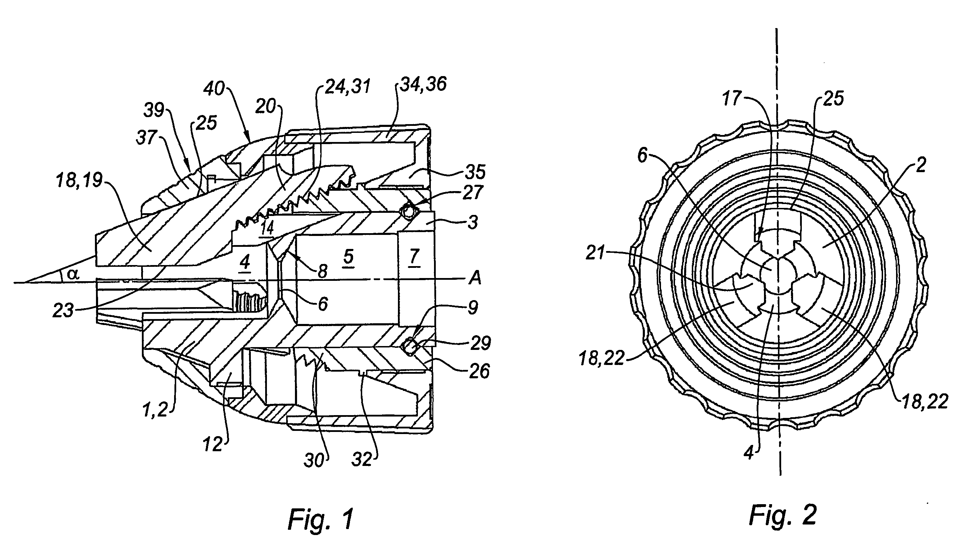

Comme cela est représenté aux figures 1 à 3, un mandrin selon un premier mode de réalisation de l'invention comporte un corps central 1, de forme générale cylindrique et s'étendant selon un axe A.

Le corps 1 possède une partie avant 2 et une partie arrière 3. Le corps 1 présente un premier trou axial 4 débouchant vers l'avant et un second trou axial 5 débouchant vers l'arrière, reliés l'un à l'autre par une ouverture axiale 6 de plus faible diamètre. Le second trou axial 5 présente en outre une extrémité arrière 7 de plus grand diamètre, formant un épaulement. Les parois de fond annulaires 8 des trous 4, 5 sont de forme générale tronconique.

Le second trou 5 permet l'insertion et la fixation d'un arbre moteur d'une machine tournante, non représenté.

La partie arrière 3 présente une gorge périphérique 9 en forme de V.

La partie avant 2 comporte, de l'avant vers l'arrière, une zone cylindrique 10, une zone de forme générale tronconique 11 et une zone cylindrique 12 de plus grand diamètre, puis à nouveau une zone cylindrique 13 de même diamètre que la partie arrière 3.

La partie avant 2 présente trois logements 14 formés par des rainures décalées angulairement l'une de l'autre d'un angle de 120°, de manière à être régulièrement réparties.

Chaque rainure présente deux parois latérales 15 et une paroi de fond 16 inclinée en direction de l'axe A, de l'arrière vers l'avant. Les parois latérales 15 sont sensiblement perpendiculaires à la paroi de fond 16. Lesdites rainures 14 débouchent dans le premier trou 4 et forment des logements convergeant vers l'avant. Chaque paroi latérale 15 de chaque rainure 14 présente, au niveau de son bord éloigné de l'axe, un épaulement 17 ou rebord formant un appui pour un mors 18, comme cela est mieux décrit ci-après.

Un mors 18 est monté dans chaque logement 14 convergeant du corps 1. Chaque mors 18 présente une section globalement rectangulaire, comme cela apparaît à la figure 2. Bien entendu, les mors pourraient également présenter une section globalement cylindrique, comme cela est connu de l'art antérieur.

Chaque mors 18 présente une partie avant 19 et une partie arrière 20. La partie avant 19 présente une section en forme générale de T, comportant une branche 21 orientée radialement et une base 22 dont les bords prennent appui sur les rebords 17 du logement 14 correspondant.

L'extrémité libre de la branche, tournée vers l'axe, débouche dans le premier trou et présente une forme générale en V, le sommet du V définissant une ligne de contact 23 destinée à prendre appui contre un outil. La ligne de contact 23 s'étend sensiblement parallèlement à l'axe A.

La partie arrière 20 de chaque mors forme un décrochement avec la partie avant 19. La partie arrière 20 comporte une face tournée vers l'intérieur, c'est-à-dire tournée vers l'axe, présentant un filetage à droite 24. La face intérieure est inclinée vers l'axe A et vers l'avant, d'un angle α de l'ordre de 20° par rapport à l'axe A et par rapport à la ligne de contact 23.

Les mors 18 présentent de plus un dos bombé 25, tourné vers l'extérieur, également incliné d'un angle de 20° par rapport à l'axe A.

Compte tenu de leur structure, les mors 18 peuvent être réalisés par frittage, aucune opération de reprise lors de leur fabrication n'étant alors nécessaire.

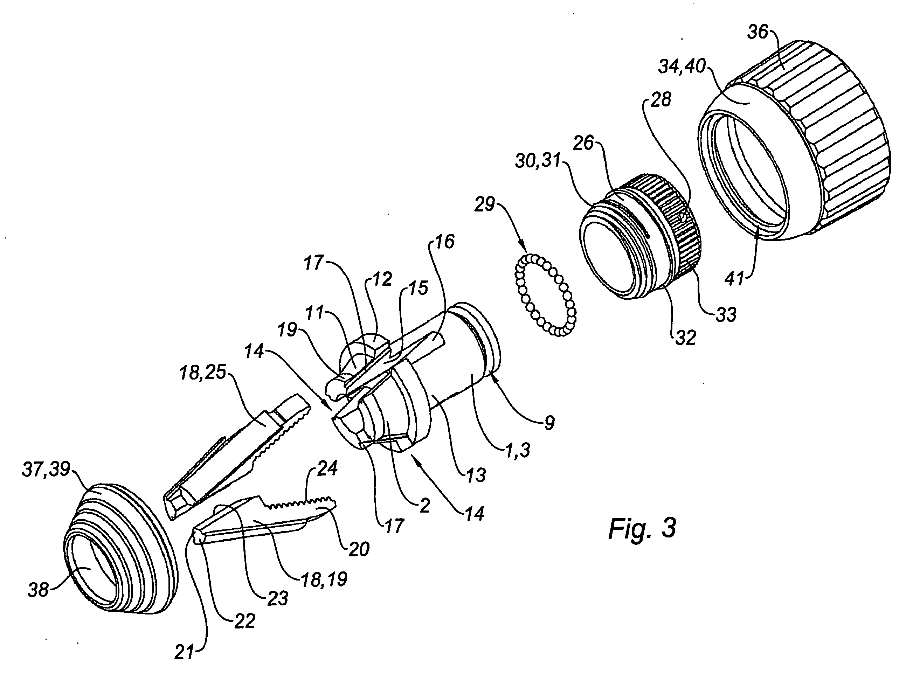

Le mandrin comporte en outre une bague de déplacement 26 des mors 18, montée pivotante à l'arrière 3 du corps 1. La bague comporte une gorge interne 27 en V, disposée en regard de la gorge 9 du corps 2 ainsi qu'une ouverture 28 (figure 3) débouchant dans la gorge interne 27. Des billes 29, insérées par l'ouverture 28, sont emprisonnées dans les gorges en V 9, 27, entre la bague 26 et le corps 1.

L'extrémité avant 30 de la bague 26 présente une paroi externe de forme générale tronconique, l'angle d'inclinaison de la paroi externe étant de l'ordre de 20° par rapport à l'axe A. La zone tronconique 30 présente un filetage à droite 31, engrenant avec le filetage interne 24 des mors 18.

La paroi externe de la bague 26 présente en outre une butée annulaire de positionnement 32, disposée dans une zone médiane de la bague 26, et un moletage 33 situé en arrière de la butée de positionnement 32.

Une chemise 34 présentant une base annulaire interne 35 est fixée par moletage sur la bague 26 de déplacement des mors. La face externe 36 de la chemise est crantée et sert à son actionnement.

Un capuchon 37 est vissé sur la zone cylindrique 12 de plus grand diamètre du corps 1. Le capuchon 37 présente une paroi interne 38 tronconique coopérant avec le dos 25 de chaque mors 18, de manière à maintenir les mors en position dans le fond des logements 14. La paroi externe 39 du capuchon 37 est disposée dans le prolongement de celle 40 de la chemise 34. L'extrémité arrière du capuchon 37 se loge dans un évidement 41 (figure 3) formé à l'extrémité avant de la chemise 34. La chemise 34 peut pivoter par rapport au capuchon 37, qui est solidaire du corps.

Le fonctionnement du mandrin selon le premier mode de réalisation de l'invention est le suivant.

L'arbre moteur d'une machine tournante est fixé dans le second trou 5 du corps 1.

On supposera que les mors 18 sont en position écartée les uns des autres, c'est-à-dire ne s'étendent pas totalement à l'intérieur du premier trou 4 du corps 1.

Dans ce cas, un outil, par exemple un embout de vissage ou un foret, peut être introduit dans le second trou 5. L'opérateur tourne alors la chemise 34 dans le sens des aiguilles d'une montre. La bague 26 est alors également entraînée en rotation dans le même sens, de manière à déplacer les mors 18 vers l'avant dans les logements 14, afin que ceux-ci se rapprochent de l'axe A et serrent l'outil.

Il est à noter que, lors du déplacement des mors 18, chaque ligne de contact 23 reste toujours sensiblement parallèle à l'axe A.

A l'inverse, lorsque l'opérateur tourne la chemise 34 dans le sens inverse des aiguilles d'une montre, les mors 18 sont alors écartés de l'axe A, afin de libérer l'outil.

La structure compacte du mandrin et sa faible longueur le rendent particulièrement adapté à l'équipement de machines tournantes tels que les tournevis électriques.

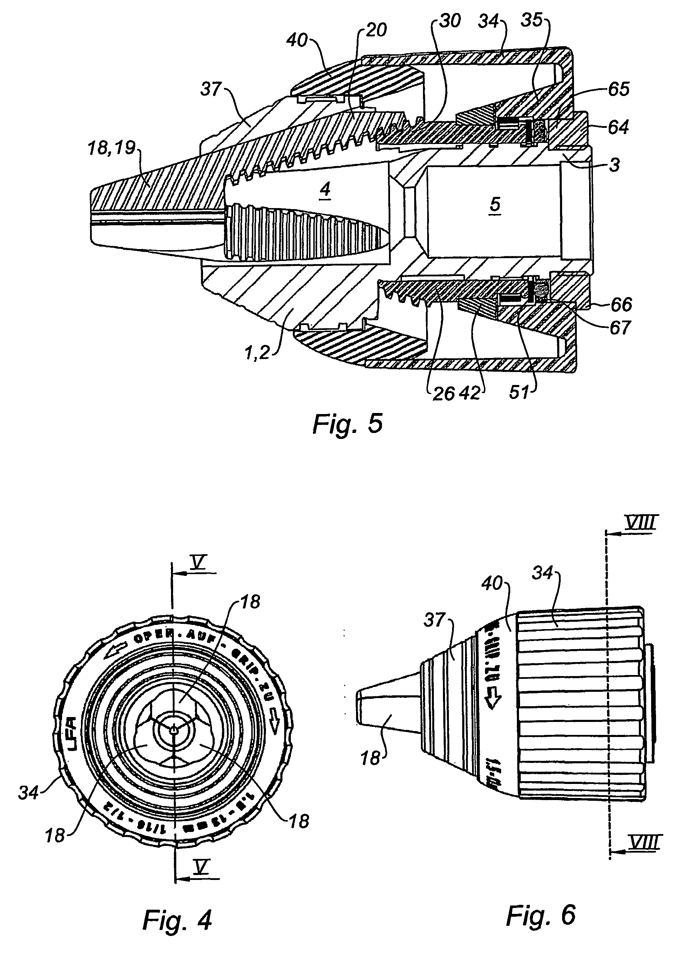

Les figures 4 à 9 représentent un mandrin selon un deuxième mode de réalisation de l'invention qui diffère du premier mode de réalisation essentiellement en ce que le mandrin comprend :
- un insert 42 porté par la bague 26 de déplacement des mors et immobilisé en rotation sur cette bague,
- des moyens de verrouillage radial portés par l'insert 42 et mobiles entre une position déverrouillée dans laquelle la bague 26 est susceptible d'être entraînée en rotation par rapport au corps 1 et une position verrouillée dans laquelle les moyens de verrouillage coopèrent avec le corps 1 de manière à empêcher une rotation de la bague 26 dans le sens de l'écartement des mors,
et en ce que la base annulaire 35 de la chemise 34 n'est pas montée sur la bague 26 de déplacement des mors mais coopère avec l'insert 42 pour l'entraîner en rotation par rapport au corps 1.

L'insert 42, réalisé de préférence en matière synthétique, présente une partie avant globalement tronconique dont la face intérieure comprend deux ergots 43 diamétralement opposés s'étendant radialement vers l'intérieur. L'insert 42 comporte également en prolongement de la partie avant deux doigts 44 diamétralement opposés s'étendant axialement vers l'arrière, deux premières pattes 45 s'étendant de part et d'autre de l'un des doigts 44, et deux secondes pattes 46 s'étendant de part et d'autre de l'autre doigt 44. Les différentes pattes 45, 46 et les deux doigts 44 présentant une longueur sensiblement identique, cette longueur étant considérée dans le sens de l'axe du mandrin.

L'extrémité arrière de la bague 26 comporte deux évidements 47 diamétralement opposés ouverts axialement et radialement dans lesquels sont logés les ergots 43 de l'insert 42, de manière à rendre solidaire en rotation l'insert et la bague.

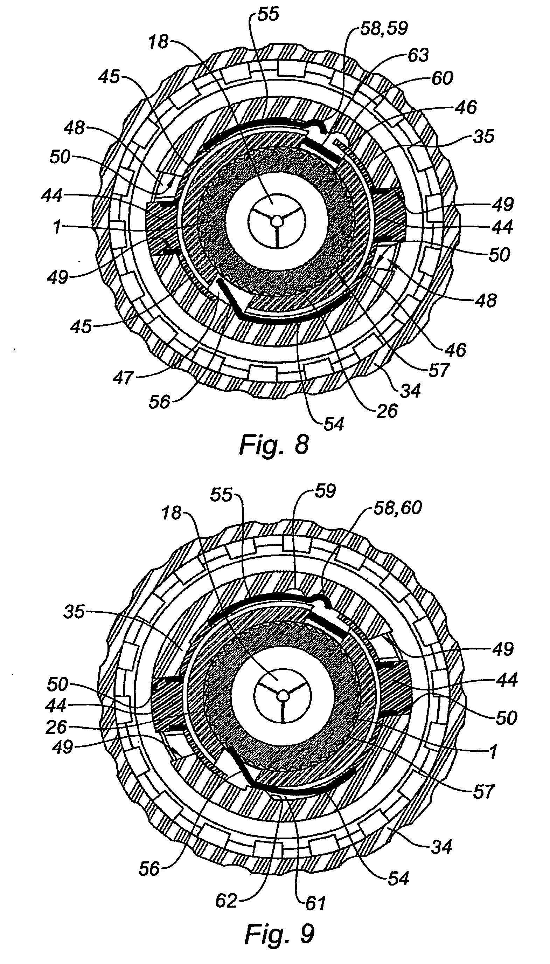

La chemise 34 possède un mouvement relatif angulaire par rapport aux moyens de verrouillage et à l'insert 42 entre une première position (représentée sur la figure 8) dans laquelle les moyens de verrouillage sont en position déverrouillée et la chemise 34 peut entraîner en rotation l'insert 42 et une seconde position (représentée sur la figure 9) dans laquelle les moyens de verrouillage sont en position verrouillée. Il convient de noter que ce sont les déplacements de la chemise 34 entre ses première et seconde positions qui actionnent les déplacements des moyens de verrouillage entre leurs positions déverrouillée et verrouillée.

Comme montré plus particulièrement sur les figures 8 et 9, la base annulaire 35 de la chemise 34 comporte deux encoches 48 diamétralement opposées qui coopèrent avec les deux doigts 44 ménagés sur l'insert 42, les encoches 48 étant centrées sur l'axe A du mandrin et étant d'une longueur supérieure à celle des doigts 44 de l'insert, cette longueur étant considérée dans le sens de l'arc de cercle suivant lequel s'étendent ces encoches. Ces encoches 48 sont délimitées latéralement chacune par deux faces 49, 50 orientées sensiblement radialement.

Les moyens de verrouillage radial comportent un anneau 51 monté solidaire en rotation sur l'insert 42 et fixé sur celui-ci au moyen de deux portions de fixation 52 diamétralement opposées qui pénètrent dans des parties complémentaires ménagées dans l'insert 42. De préférence, l'anneau 51 est appliqué contre l'extrémité arrière de l'insert 42 et prend donc appui contre les extrémités libres des doigts 44 et des pattes 45, 46.

Chaque portion de fixation 52 possède une base qui s'étend radialement vers l'extérieur à partir de l'anneau 51 et deux replis latéraux qui s'étendent depuis la base perpendiculairement au plan de l'anneau 51 en direction de l'avant de l'anneau. Les replis sont engagés de manière élastique dans des crans 53 ménagés sur les faces latérales des doigts 44 de l'insert, afin de permettre l'immobilisation en rotation de l'anneau 51 par rapport à l'insert 42. Les replis présentent avantageusement une forme épousant la forme des crans des doigts de l'insert.

L'anneau 51 comprend également une première lame ressort 54 et une deuxième lame ressort 55 en forme d'arc de cercle centré sur l'axe du mandrin. Les deux lames ressort 54, 55 s'étendent à l'opposé l'une de l'autre, vers l'avant de l'anneau, au-dessus du tronçon arrière de la bague 26 de déplacement des mors.

La première lame ressort 54 possède une extrémité libre 56 recourbée en direction de l'axe du mandrin et qui fait saillie au travers de l'un des évidements 47 ménagés dans la bague 26 de déplacement des mors et qui, en position verrouillée des moyens de verrouillage radial, coopère avec une denture périphérique 57 ménagée sur la partie arrière 3 du corps 1, et plus particulièrement dans la zone de celui-ci recouverte par la bague 26 de déplacement des mors. La denture périphérique 57 s'étend coaxialement à l'axe A du corps 2.

La deuxième lame ressort 55 possède une extrémité libre munie d'un relief 58 tourné vers l'extérieur du mandrin pour coopérer respectivement dans les première et seconde positions de la chemise, avec une première dépression 59 et une deuxième dépression 60 ménagées dans la paroi intérieure de la base annulaire 35 de la chemise 34.

Par ailleurs, la base annulaire 35 de la chemise comporte, dans sa paroi intérieure, une partie évidée 61 se terminant par une rampe 62 et dans laquelle l'extrémité libre 56 de la première lame ressort 54 est logée, dans la première position de la chemise, pour dégager cette extrémité libre 56 hors de la denture 57 du corps 1, comme cela est représenté sur la figure 8.

L'anneau 51 comprend également une patte 63 s'étendant axialement vers l'avant du mandrin et engagée dans l'autre des évidements 47 ménagés dans la bague 26 de déplacement des mors, comme cela est représenté sur les figures 8 et 9.

On comprend par ailleurs que la différence de longueur entre les doigts 44 de l'insert 42 et les encoches 48 de la chemise 34 est adaptée pour que dans la première position de la chemise, les doigts 44 sont en butée contre la face radiale 49 des encoches 48 et le relief 58 de la deuxième lame ressort 55 est logé dans la première dépression 59, et que dans la seconde position de la chemise, les doigts 44 sont en butée contre la face radiale 50 des encoches 48 et le relief 58 de la deuxième lame ressort 55 est logé dans la deuxième dépression 60.

Lorsque l'extrémité libre 56 de la première lame ressort 54 est en position dégagée de la denture 57, comme montré à la figure 8, il est possible de réaliser le serrage ou le desserrage de l'outil par pivotement de la chemise 34, et par suite de l'insert 42 et de la bague 26 d'entrainement des mors. Au contraire, lorsque l'extrémité libre 56 de la première lame ressort 54 est engagée dans la denture 57, comme montré à la figure 9, le pivotement de la chemise 34 autour du corps 1 est rendu impossible sous la seule action des vibrations résultant du fonctionnement de la machine et du travail de l'outil.

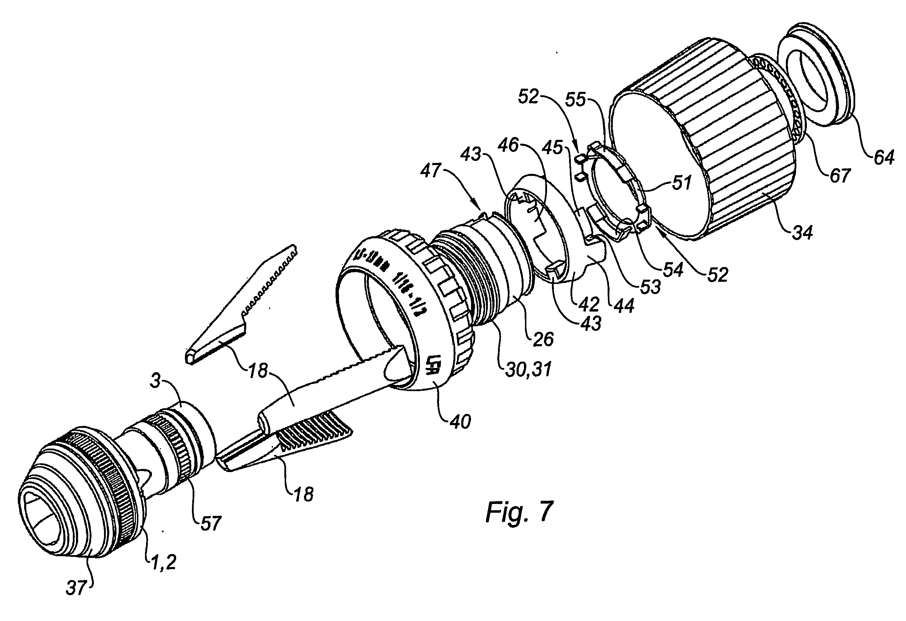

Comme le montre plus particulièrement les figures 5 et 7, le mandrin possède un bouchon 64 comprenant une portion avant 65 cylindrique engagée dans la base annulaire 35 de la chemise et un flasque 66 venant en butée contre la face arrière de la base annulaire 35 de la chemise 34. Afin de faciliter la rotation de la bague 26 de déplacement des mors sur le corps, un anneau 67 muni de billes de roulement est interposé entre la face arrière de la bague 26 de déplacement des mors et le bouchon 64.

Il convient de noter que, selon le mode de réalisation représenté sur les figures 4 à 9, la pièce annulaire 40 est couplée à la partie avant 2 du corps 1 par l'intermédiaire d'un moletage et est mobile en rotation par rapport à la chemise 34, et que le capuchon annulaire 37 et le corps 1 sont réalisés en une seule pièce.

Il convient également de noter que la partie arrière de chaque mors 18 comporte un méplat s'étendant selon l'axe A du mandrin.

Le fonctionnement du mandrin selon le second mode de réalisation de l'invention est le suivant.

On supposera que les mors 18 sont en position écartée les uns des autres, et que la chemise 34 et les moyens de verrouillage sont dans la position représentée sur la figure 8.

L'opérateur tourne alors la chemise 34 dans le sens des aiguilles d'une montre, qui entraîne en rotation l'insert 42 par l'intermédiaire des doigts 44 engagés dans les encoches 48 de la chemise 34. La bague 26 est alors également entraînée en rotation dans le même sens, de manière à déplacer les mors 18 vers l'avant dans les logements 14, afin que ceux-ci se rapprochent de l'axe A et serrent l'outil.

Par contre, lorsque les mors 18 entrent en contact avec l'outil inséré dans le mandrin, la résistance de l'insert 42 à l'encontre de l'entrainement en rotation par la chemise 34 augmente. Il y a alors rotation de la chemise 34 par rapport à l'ensemble constitué par l'insert 42, la bague 26 et les lames ressort 54, 55. Cette rotation relative est limitée par la différence de longueur entre les doigts 44 de l'insert 42 et les encoches 48 de la chemise 34. Les doigts 44 viennent alors en butée contre les faces radiales 50 des encoches 48 tandis que le relief 58, porté par la deuxième lame ressort 55 est dégagé, par un effet de flexion, hors de la première dépression 59 pour venir se loger-dans la deuxième dépression 60. Simultanément, l'extrémité libre 56 de la première lame ressort 54 est infléchie vers l'intérieur du mandrin de sorte que cette extrémité libre coopère avec la denture 57 portée par le corps 1. Le serrage du mandrin peut alors se poursuivre jusqu'au maximum du couple applicable par l'operateur avec un effet de cliquetis de la première lame ressort 54 sur la denture 57 du corps qui est audible par l'operateur. La coopération entre l'extrémité libre 56 de la première lame ressort 54 et la denture 57 évite tout déverrouillage intempestif par les vibrations provoquées lors d'une percussion.

Lorsque l'on veut retirer à nouveau l'outil hors du mandrin, il suffit d'entraîner la chemise 34 depuis sa seconde position vers sa première position, c'est-à-dire dans le sens inverse des aiguilles d'une montre. Il se produit alors une rotation relative de la chemise 34 par rapport à l'insert 42, mouvement au cours duquel le relief 58 se déplace vers la première dépression 59 et l'extrémité libre 56 de la première lame ressort 54 se dégage hors de la denture 57. Les doigts 44 de l'insert 42 viennent à nouveau en butée contre la première face radiale 49 des encoches 48 portées par la chemise. Toute rotation supplémentaire de la chemise 34 dans le sens inverse des aiguilles d'une montre entraîne en rotation l'insert 42 et la bague 26 par l'intermédiaire des doigts 44, et donc le desserrage des mors 18.

Comme il va de soi, l'invention ne se limite pas aux seules formes de réalisation de ce mandrin, décrites ci-dessus à titre d'exemples, mais elle embrasse au contraire toutes les variantes, inclues dans les limitations du jeu de revendications annexées.

## Revendications

1. Mandrin porte-outil pour l'équipement d'une machine tournante, comprenant :
- un corps (1) comportant une partie arrière (3) destinée à être fixée à un arbre moteur de la machine tournante et une partie avant (2) dans laquelle sont ménagés des logements (14) convergeant vers l'avant ;
- des mors (18) montés coulissants chacun dans un logement (14) du corps (1) et présentant un filetage intérieur (24) ;
- une bague (26) de déplacement des mors (18), montée pivotante par rapport au corps (1), présentant un filetage périphérique (31) coopérant avec le filetage intérieur (24) des mors (18) de telle manière que la rotation de la bague (26) entraîne le rapprochement ou l'écartement des mors (18) ;
**caractérisé en ce que** le mandrin présente un axe (A), les mors (18) s'étendant selon un axe incliné par rapport à l'axe (A) du mandrin, d'un angle (α) compris entre 15° et 30°, et **en ce que** le mandrin comprend :
- un insert (42) porté par la bague (36) de déplacement des mors et immobilisé en rotation sur cette bague,
- une chemise (34) formant une partie de la surface extérieure du mandrin et destinée à être actionnée manuellement par un utilisateur, la chemise étant montée pivotante par rapport au corps (1) et présentant une portion intérieure qui coopère avec l'insert (42) pour l'entraîner en rotation par rapport au corps, et
- des moyens de verrouillage radial portés par l'insert (42) et mobiles entre une position déverrouillée dans laquelle la bague (26) est susceptible d'être entraînée en rotation par rapport au corps (1) et une position verrouillée dans laquelle les moyens de verrouillage coopèrent avec le corps (1) de manière à empêcher une rotation de la bague (26) dans le sens de l'écartement des mors, les moyens de verrouillage étant destinés à être actionnés par la chemise (34).

2. Mandrin selon la revendication 1, **caractérisé en ce que** les mors (18) s'étendent selon un axe incliné par rapport à l'axe du mandrin, d'un angle (α) compris entre 16° et 20°, préférentiellement de l'ordre de 17°.

3. Mandrin selon la revendication 1 ou 2, **caractérisé en ce que** les moyens de verrouillage radial sont immobilisés en rotation sur l'insert (42), et **en ce que** la chemise (34) possède un mouvement relatif angulaire par rapport aux moyens de verrouillage et à l'insert entre une première position dans laquelle les moyens de verrouillage sont en position déverrouillée et la chemise peut entraîner en rotation l'insert (42) et une seconde position dans laquelle les moyens de verrouillage sont en position verrouillée, les déplacements de la chemise entre ses première et seconde positions actionnant les déplacements des moyens de verrouillage entre leurs positions déverrouillée et verrouillée.

4. Mandrin selon l'une des revendications 1 à 3, **caractérisé en ce que** les moyens de verrouillage comprennent au moins une première lame ressort (54) montée fixe angulairement sur l'insert (42) et possédant une extrémité libre (56) qui fait saillie au travers d'un évidement (47) ménagé dans la bague (26) de déplacement des mors et qui, en position verrouillée des moyens de verrouillage radial, coopère avec une denture périphérique (57) ménagée sur le corps (1).

5. Mandrin selon la revendication 4, **caractérisé en ce que** les moyens de verrouillage comprennent au moins une deuxième lame ressort (55) qui possède une extrémité libre munie d'un relief (58) qui coopère respectivement dans les première et seconde positions de la chemise, avec une première et une deuxième dépressions (59, 60) ménagées dans la chemise (34).

6. Mandrin selon la revendication 5, **caractérisé en ce que** les première et deuxième lames ressort (54, 55) sont solidaires d'un anneau (51) porté par l'insert (42) et immobilisé en rotation sur cet insert au moyen d'au moins deux portions de fixation (52) qui pénètrent dans des parties complémentaires ménagées dans l'insert.

7. Mandrin selon l'une des revendications 4 à 6, **caractérisé en ce que** la chemise (34) comprend au moins une partie évidée (61) dans laquelle l'extrémité libre (56) de la première lame ressort (54) est logée, dans la première position de la chemise, pour dégager cette extrémité libre hors de la denture (57) du corps.

8. Mandrin selon l'une des revendications 4 à 7, **caractérisé en ce que** la chemise (34) comporte au moins deux encoches (48) qui coopèrent avec au moins deux doigts (44) ménagés sur l'insert, les encoches étant centrées sur l'axe (A) du mandrin et étant d'une longueur supérieure à celle des doigts de l'insert, cette longueur étant considérée dans le sens de l'arc de cercle suivant lequel s'étendent ces encoches.

9. Mandrin selon la revendication 8, **caractérisé en ce que** la différence de longueur entre les doigts (44) de l'insert (42) et les encoches (48) de la chemise (34) est adaptée pour que dans la première position de la chemise, les doigts sont en butée contre l'une (49) des faces des encoches et le relief (58) de la deuxième lame ressort (55) est dans la première dépression (59), et que dans la seconde position de la chemise, les doigts sont en butée contre l'autre (50) des faces des encoches (48) et le relief (58) de la deuxième lame ressort (55) est dans la deuxième dépression (58).

10. Mandrin selon la revendication 8 ou 9, lorsqu'elle dépend de la revendication 11, **caractérisé en ce que** les portions de fixation (52) de l'anneau (51) comprennent chacune une base qui s'étend sensiblement radialement vers l'extérieur à partir de l'anneau et deux replis qui s'étendent depuis la base transversalement par rapport au plan de l'anneau, les replis étant montées de manière élastique sur les doigts (44) de l'insert (42) qui pénètrent dans les encoches (48) de la chemise (34).

## Claims

1. A tool holder chuck for equipping a rotating machine, comprising:
- a body (1) including a rear portion (3) intended to be attached on a driving spindle of the rotating machine and a front portion (2) in which are made housings (14) converging forwards;
- jaws (18) each slideably mounted in a housing (14) of the body (1) and having an inner threading (24);
- a ring (26) for displacing the jaws (18), pivotally mounted relatively to the body (1), having peripheral threading (31) cooperating with the inner threading (24) of the jaws (18) so that rotation of the ring (26) causes the jaws (18) to move closer to or away from each other;
**characterized in that** the chuck has an axis (A), the jaws (18) extending along an axis tilted relatively to the axis (A) of the chuck, by an angle (α) comprised between 15° and 30°, and **in that** the chuck comprises:
- an insert (42) borne by the ring (36) for displacing the jaws and immobilized in rotation on this ring,
- a sleeve (34) forming a portion of the outer surface of the chuck and intended to be manually actuated by a user, the sleeve being pivotally mounted relatively to the body (1) and having an inner portion which cooperates with the insert (42) in order to drive it into rotation relatively to the body, and
- radial locking means borne by the insert (42) and movable between an unlocked position in which the ring (26) may be driven into rotation relatively to the body (1) and a locked position in which the locking means cooperate with the body (1) so as to prevent rotation of the ring (26) in the direction for separating the jaws, the locking means being intended to be actuated by the sleeve (34).

2. The chuck according to claim 1, **characterized in that** the jaws (18) extend along a tilted axis relatively to the axis of the chuck, by an angle (α) comprised between 16 and 20°, preferentially of the order of 17°.

3. The chuck according to claim 1 or 2, **characterized in that** the radial locking means are immobilized in rotation on the insert (42), and **in that** the sleeve (34) has a relative angular movement with respect to the locking means and to the insert between a first position in which the locking means are in the unlocked position and the sleeve may drive into rotation the insert (42) and a second position in which the locking means are in the locked position, the displacements of the sleeve between its first and second positions actuating the displacements of the locking means between their unlocked and locked positions.

4. The chuck according to one of claims 1 to 3, **characterized in that** the locking means comprise at least one spring leaf (54) fixedly mounted angularly on the insert (42) and having a free end (56), which protrudes through a recess (47) made in the ring (26) for displacing the jaws, and which, in the locked position of the radial locking means, cooperates with peripheral teeth (57) made on the body (1).

5. The chuck according to claim 4, **characterized in that** the locking means comprise at least one second spring leaf (55) which has a free end provided with a raised portion (58) which respectively cooperates in the first and second positions of the sleeve, with first and second recesses (59, 60) made in the sleeve (34).

6. The chuck according to claim 5, **characterized in that** the first and second spring leaves (54, 55) are firmly attached to a ring (51) borne by the insert (42) and immobilized in rotation on this insert by means of at least two attachment portions (52), which penetrate into mating portions made in the insert.

7. The chuck according to one of claims 4 to 6, **characterized in that** the sleeve (34) comprises at least one recessed portion (61) in which the free end (56) of the first spring leaf (54) is housed, in the first position of the sleeve, in order to clear this free end out of the teeth (57) of the body.

8. The chuck according to one of claims 4 to 7, **characterized in that** the sleeve (34) includes at least two notches (48), which cooperate with at least two fingers (44) made on the insert, the notches being centered on the axis (A) of the chuck and being of a length greater than that of the fingers of the insert, this length being considered in the direction of the circular arc along which extend these notches.

9. The chuck according to claim 8, **characterized in that** the difference in length between the fingers (44) of the insert (42) and the notches (48) of the sleeve (34) is adapted so that in the first positions of the sleeve, the fingers are in abutment against one (49) of the faces of the notches and the raised portion (58) of the second spring leaf (55) is in the first recess (59), and that in the second position of the sleeve, the fingers are in abutment against the other one (50) of the faces of the notches (48) and the raised portion (58) of the second spring leaf (55) is in the second recess (58).

10. The chuck according to claim 8 or 9, when it depends on claim 11, **characterized in that** the attachment portions (52) of the ring (51) each comprise a base, which extend substantially radially outwards from the ring and two folds, which extend from the base transversely relatively to the plane of the ring, the folds being elastically mounted on the fingers (44) of the insert (42), which penetrate into the notches (48) of the sleeve (34).

## Patentansprüche

1. Werkzeughaltefutter zur Ausstattung einer drehenden Maschine, das umfasst:
- einen Körper (1), der einen hinteren Abschnitt (3), der dazu bestimmt ist, an einer Motorwelle der drehenden Maschine befestigt zu sein, und einen vorderen Abschnitt (2), in den nach vorn konvergierende Aufnahmen (14) eingearbeitet sind, aufweist,
- Backen (18), die jeweils in einer Aufnahme (14) des Körpers (1) gleitend montiert sind und ein Innengewinde (24) aufweisen,
- einen Verlagerungsring (26) der Backen (18), der im Verhältnis zum Körper (1) drehend montiert ist, der ein Umfangsgewinde (31) aufweist, das mit dem Innengewinde (24) der Backen (18) derart zusammenarbeitet, dass die Rotation des Rings (26) die Annäherung oder Entfernung der Backen (18) bewirkt,
**dadurch gekennzeichnet, dass** das Futter eine Achse (A) aufweist, wobei sich die Backen (18) gemäß einer im Verhältnis zur Achse (A) des Futters in einem Winkel (α) zwischen 15° und 30° geneigten Achse erstrecken, und dass das Futter umfasst:
- einen von dem Verlagerungsring (36) der Backen getragenen und in Rotation auf diesem Ring festgestellten Einsatz (42),
- einen Mantel (34), der einen Abschnitt der äußeren Fläche des Futters bildet und dazu bestimmt ist, von einem Benutzer manuell betätigt zu sein, wobei der Mantel im Verhältnis zum Körper (1) drehend montiert ist und einen Innenabschnitt aufweist, der mit dem Einsatz (42) zusammenarbeitet, um ihn im Verhältnis zum Körper rotierend anzutreiben, und
- Mittel zur radialen Verriegelung, die von dem Einsatz (42) getragen werden und die zwischen einer entriegelten Stellung, in der der Ring (26) im Verhältnis zum Körper (1) rotierend antreibbar ist, und einer verriegelten Stellung, in der die Verriegelungsmittel mit dem Körper (1) derart zusammenarbeiten, dass eine Rotation des Rings (26) in Richtung der Entfernung der Backen verhindert wird, bewegbar sind, wobei die Verriegelungsmittel dazu bestimmt sind, von dem Mantel (34) betätigt zu werden.

2. Futter nach Anspruch 1, **dadurch gekennzeichnet, dass** sich die Backen (18) gemäß einer im Verhältnis zur Achse des Futters in einem Winkel (α) zwischen 16° und 20°, vorzugsweise in der Größenordnung von 17°, geneigten Achse erstrecken.

3. Futter nach Anspruch 1 oder 2, **dadurch gekennzeichnet, dass** die Mittel zur radialen Verriegelung auf dem Einsatz (42) in Rotation festgestellt sind, und dass der Mantel (34) eine relative Winkelbewegung im Verhältnis zu den Verriegelungsmitteln und zum Einsatz zwischen einer ersten Stellung, in der die Verriegelungsmittel in entriegelter Stellung sind und der Mantel den Einsatz (42) rotierend antreiben kann, und einer zweiten Stellung, in der die Verriegelungsmittel in verriegelter Stellung sind, besitzt, wobei die Verlagerungen des Mantels zwischen seiner ersten und zweiten Stellung die Verlagerungen der Verriegelungsmittel zwischen ihrer entriegelten und verriegelten Stellung bewirken.

4. Futter nach einem der Ansprüche 1 bis 3, **dadurch gekennzeichnet, dass** die Verriegelungsmittel mindestens eine erste Federzunge (54) umfassen, die winkelmäßig fest auf dem Einsatz (42) montiert ist und ein freies Ende (56) besitzt, das durch eine in den Verlagerungsring (26) der Backen eingearbeitete Aussparung (47) hervorsteht und die in verriegelter Stellung der Mittel zur radialen Verriegelung mit einer Umfangszahnung (57) zusammenarbeitet, die auf dem Körper (1) ausgebildet ist.

5. Futter nach Anspruch 4, **dadurch gekennzeichnet, dass** die Verriegelungsmittel mindestens eine zweite Federzunge (55) umfassen, die ein freies Ende besitzt, das mit einem Relief (58) ausgestattet ist, das jeweils in der ersten und zweiten Stellung des Mantels mit einer ersten und einer zweiten Vertiefung (59, 60) zusammenarbeitet, die in den Mantel (34) eingearbeitet sind.

6. Futter nach Anspruch 5, **dadurch gekennzeichnet, dass** die erste und zweite Federzunge (54, 55) mit einem Ring (51) verbunden sind, der von dem Einsatz (42) getragen wird und in Rotation auf diesem Einsatz anhand von mindestens zwei Befestigungsabschnitten (52) festgestellt ist, die in die komplementären Teile eingreifen, die in den Einsatz eingearbeitet sind.

7. Futter nach einem der Ansprüche 4 bis 6, **dadurch gekennzeichnet, dass** der Mantel (34) mindestens einen ausgesparten Abschnitt (61) umfasst, in dem das freie Ende (56) der ersten Federzunge (54) in der ersten Stellung des Mantels untergebracht ist, um dieses freie Ende aus der Zahnung (57) des Körpers zu befreien.

8. Futter nach einem der Ansprüche 4 bis 7, **dadurch gekennzeichnet, dass** der Mantel (34) mindestens zwei Kerben (48) aufweist, die mit mindestens zwei Fingern (44) zusammenarbeiten, die auf dem Einsatz ausgebildet sind, wobei die Kerben auf der Achse (A) des Futters zentriert sind und eine Länge haben, die länger ist als die der Finger des Einsatzes, wobei diese Länge in der Richtung des Kreisbogens betrachtet wird, in die sich diese Kerben erstrecken.

9. Futter nach Anspruch 8, **dadurch gekennzeichnet, dass** die Längendifferenz zwischen den Fingern (44) des Einsatzes (42) und den Kerben (48) des Mantels (34) angepasst ist, damit, in der ersten Stellung des Mantels, die Finger im Anschlag an einer (49) der Seiten der Kerben sind und das Relief (58) der zweiten Federzunge (55) in der ersten Vertiefung (59) ist, und damit, in der zweiten Stellung des Mantels, die Finger im Anschlag an der anderen (50) der Seiten der Kerben (48) sind und das Relief (58) der zweiten Federzunge (55) in der zweiten Vertiefung (58) ist.

10. Futter nach Anspruch 8 oder 9, wenn er von Anspruch 11 abhängt, **dadurch gekennzeichnet, dass** die Befestigungsabschnitte (52) des Rings (51) jeweils eine Basis, die sich ab dem Ring etwa radial nach außen erstreckt, und zwei Falten, die sich ab der Basis quer im Verhältnis zur Ebene des Rings erstrecken, umfassen, wobei die Falten elastisch auf den Fingern (44) des Einsatzes (42) montiert sind, die in die Kerben (48) des Mantels (34) eindringen.
